# EUROPEAN PATENT APPLICATION

(11) **EP 4 475 448 A1**
(43) Date of publication of application: **11.12.2024**
(21) Application number: 23773832.3
(22) Date of filing: 21.03.2023
(51) Int. Cl.: H04B 1/7183

(54) **CLOCK SYNCHRONIZATION METHOD AND APPARATUS**

(30) Priority: 25.03.2022 CN 202210301521; 28.06.2022 CN 202210740021
(71) Applicant: Huawei Technologies Co., Ltd., Shenzhen, Guangdong 518129 (CN)
(72) Inventor: LIANG, Fangli, Shenzhen, Guangdong 518129 (CN); WANG, Kang, Shenzhen, Guangdong 518129 (CN); YU, Qian, Shenzhen, Guangdong 518129 (CN); WANG, Wei, Shenzhen, Guangdong 518129 (CN)
(74) Representative: Maiwald GmbH
(86) International application number: PCT/CN2023/082684
(87) International publication number: WO 2023/179585

(57) **Abstract**

This application is applied to a wireless local area network system that supports 802.11 series protocols such as a next-generation Wi-Fi protocol of the IEEE 802.11 ax, for example, 802.11be, Wi-Fi 7, or EHT, and a next-generation protocol of the 802.11be or Wi-Fi 8, and may be further applied to an ultra-wideband UWB-based wireless personal area network system and a sensing (sensing) system. Embodiments of this application provide a clock synchronization method and apparatus. The clock synchronization method includes: sending a narrowband synchronization frame via a narrowband system, to complete coarse clock synchronization in a wideband system; and sending a wideband frame after duration, allocated by the narrowband system, for switching from a narrowband to a wideband ends, to complete fine clock synchronization in the wideband system, so as to reduce complexity of clock synchronization in the wideband system.

## Description

This application claims priorities to Chinese Patent Application No. 202210301521.5, filed with the China National Intellectual Property Administration on March 25, 2022 and entitled "COMMUNICATION METHOD AND APPARATUS", and to Chinese Patent Application No. 202210740021.1, filed with the China National Intellectual Property Administration on June 28, 2022 and entitled "CLOCK SYNCHRONIZATION METHOD AND APPARATUS", both of which are incorporated herein by reference in their entireties.

### TECHNICAL FIELD

Embodiments of this application relate to the communication field, and more specifically, to a clock synchronization method and apparatus.

### BACKGROUND

An ultra-wideband (Ultra-Wideband, UWB) technology is a wireless carrier communication technology. In the UWB, a pulse whose pulse width is at a nanosecond level is used as a basic signal of the UWB. The UWB has features such as a high transmission rate, a large system capacity, large spectrum bandwidth, and low power spectrum density, and can coexist with an existing system of short-range communication and the like. Thanks to the features of the UWB, the UWB has high time resolution, a strong anti-multipath capability, and high ranging and positioning precision at a centimeter level. It has become a research hotspot to implement ranging and positioning in a complex multipath environment.

Currently, during ranging and positioning application of a UWB system, a personal area network needs to be constructed. In a process of constructing the network, time synchronization between devices needs to be completed. In a ranging process, preamble synchronization and symbol synchronization (or referred to as coarse synchronization and fine synchronization) need to be performed. Corresponding demodulation, decoding, and ranging time calculation can be performed only after signal synchronization. Consequently, a design of the system is complex and processing is difficult. Therefore, how to implement time synchronization on a premise of reducing complexity of a wideband system becomes an urgent problem to be resolved.

### SUMMARY

Embodiments of this application provide a clock synchronization method, to assist a wideband system in completing time synchronization via synchronization information of a narrowband, so as to implement time synchronization between devices on a premise of reducing complexity of the wideband system.

According to a first aspect, a clock synchronization method is provided. The method may be performed by a transmitter device, or may be performed by a component (for example, a chip or a circuit) of a transmitter device. This is not limited. For ease of description, an example in which the method is performed by the transmitter device is used for description below.

The method includes: A transmitter device obtains a first parameter. The first parameter includes a parameter used to determine a first moment at which a narrowband synchronization frame is sent on a narrowband channel and a parameter indicating first duration for switching from a narrowband system to a wideband system. The transmitter device starts to send the narrowband synchronization frame to a receiver device on the narrowband channel at the first moment. The narrowband synchronization frame is used for coarse clock synchronization in an ultra-wideband UWB system. The transmitter device starts to send a UWB frame to the receiver device after the first duration after sending of the narrowband synchronization frame ends. A frame header of the UWB frame is used for fine clock synchronization in the UWB system.

Based on the technical solutions, the transmitter device obtains the first parameter, and sends, on the narrowband channel based on the parameters included in the first parameter, the narrowband synchronization frame used for coarse clock synchronization in the UWB system, so that the receiver device implements coarse clock synchronization in the UWB system based on the narrowband synchronization frame. Coarse clock synchronization in the UWB system indicates that the receiver device determines a start moment at which an ultra-wideband UWB frame is received. Further, the UWB frame used for fine clock synchronization in the UWB system is sent after the first duration after sending of the narrowband synchronization frame ends. In other words, in the technical solutions, coarse clock synchronization in the UWB system is implemented based on the narrowband synchronization frame without a preamble of the UWB frame. Therefore, a UWB frame including a simplified and shortened preamble may be designed, to reduce design complexity of the UWB frame.

In addition, compared with implementation of coarse clock synchronization in the UWB system based on the preamble of the UWB frame, implementation of coarse clock synchronization in the UWB system based on the narrowband synchronization frame can reduce synchronization time of the wideband system and a transmission delay of the UWB frame.

With reference to the first aspect, in some implementations of the first aspect, the narrowband synchronization frame includes a preamble, a synchronization sequence, and a carrier signal, the preamble is used for automatic gain control, the synchronization sequence is used to determine a time synchronization point, the carrier signal is used to determine a frequency offset estimation value, and the time synchronization point and the frequency offset estimation value are used for coarse clock synchronization in the UWB system.

Based on the technical solutions, a frame format of the transmitted narrowband synchronization frame may include the preamble, the synchronization sequence, and the carrier signal. This provides a simple frame format of the narrowband synchronization frame.

With reference to the first aspect, in some implementations of the first aspect, the first parameter includes the following parameters: a baseline slot, an offset, an interval, duration of the narrowband synchronization frame, the duration for switching from a narrowband to a wideband, and bandwidth, frequency point information, and transmit power that are used to send the narrowband synchronization frame. The baseline slot and the offset are used to determine the first moment, the interval indicates an interval between two adjacent times of sending the narrowband synchronization frame, and the duration for switching from the narrowband to the wideband is used to determine the first duration.

Based on the technical solutions, the first parameter may include a plurality of parameters, and a manner of sending the narrowband synchronization frame is specified based on the plurality of parameters. This improves accuracy of transmitting the narrowband synchronization frame.

With reference to the first aspect, in some implementations of the first aspect, before the transmitter device obtains the first parameter, the method further includes: The transmitter device sends a second parameter to the receiver device. The second parameter is a parameter that is expected by the transmitter device and on which transmission of the narrowband synchronization frame is based. The transmitter device receives a third parameter from the receiver device. The third parameter is a parameter that is expected by the receiver device and on which transmission of the narrowband synchronization frame is based. That the transmitter device obtains the first parameter includes: The transmitter device determines the first parameter based on the second parameter and the third parameter.

Based on the technical solutions, before the transmitter device obtains the first parameter, the transmitter device and the receiver device may negotiate an appropriate parameter for transmitting the narrowband synchronization frame. This improves accuracy of the solutions.

With reference to the first aspect, in some implementations of the first aspect, the method further includes: The transmitter device sends the first parameter to the receiver device; and receives indication information from the receiver device. The indication information indicates that transmission of the narrowband synchronization frame based on the first parameter is agreed on.

Based on the technical solutions, after obtaining the first parameter, the transmitter device sends the first parameter to the receiver device, so that the receiver device learns of a transmission manner of the narrowband synchronization frame. In addition, when the receiver device agrees to transmit the narrowband synchronization frame based on the first parameter, the receiver device may notify the transmitter device via the indication information, so that the transmitter device subsequently sends the narrowband synchronization frame.

With reference to the first aspect, in some implementations of the first aspect, the indication information includes the first parameter; or the indication information includes address information of the transmitter device and address information of the receiver device.

Based on the technical solutions, the receiver device may report different information to indicate that transmission of the narrowband synchronization frame based on the first parameter is agreed on. This improves flexibility of the solutions.

With reference to the first aspect, in some implementations of the first aspect, that the transmitter device sends the first parameter to the receiver device includes: The transmitter device broadcasts a narrowband system broadcast frame, where the narrowband system broadcast frame includes the first parameter; or sends a configured notification frame to the receiver device over a narrowband system connection link, where the configured notification frame includes the first parameter. The narrowband system connection link includes a link between the transmitter device and the receiver device.

Based on the technical solutions, the transmitter device may send the first parameter to the receiver device in a plurality of manners. This improves flexibility of the solutions.

With reference to the first aspect, in some implementations of the first aspect, when the transmitter device sends the configured notification frame to the receiver device over the narrowband system connection link, the method further includes: transmitting an encrypted measurement-related parameter and measurement result between the transmitter device and the receiver device over the narrowband system connection link, where the measurement-related parameter is used to determine a measurement process to be performed by the transmitter device and the receiver device, and the measurement result includes a result obtained after the transmitter device and the receiver device perform the measurement.

Based on the technical solutions, when the narrowband system connection link is set up between the transmitter device and the receiver device, the encrypted parameter and result may be transmitted over the narrowband system connection link. This improves security.

With reference to the first aspect, in some implementations of the first aspect, the method further includes: The transmitter device receives acknowledgment information from the receiver device. The acknowledgment information indicates that the receiver device successfully receives the narrowband synchronization frame.

Based on the technical solutions, when the receiver device successfully receives the narrowband synchronization frame, the receiver device may send the acknowledgment information to the transmitter device, to indicate that the narrowband synchronization frame is successfully received. This avoids subsequent UWB frame transmission when the narrowband synchronization frame is not successfully transmitted, reduces signaling overheads, and reduces power consumption of the UWB system.

With reference to the first aspect, in some implementations of the first aspect, the method further includes: The transmitter device receives a reply UWB frame from the receiver device. The reply UWB frame indicates that receiving of the UWB frame is completed, and the reply UWB frame includes phase information of the receiver device.

According to a second aspect, a clock synchronization method is provided. The method may be performed by a receiver device, or may be performed by a component (for example, a chip or a circuit) of a receiver device. This is not limited. For ease of description, an example in which the method is performed by the receiver device is used for description below.

The method includes: A receiver device obtains a first parameter. The first parameter includes a parameter used to determine a first moment at which a narrowband synchronization frame is sent on a narrowband channel and a parameter indicating first duration for switching from a narrowband system to a wideband system. The receiver device starts to receive the narrowband synchronization frame from a transmitter device on the narrowband channel at the first moment. The receiver device performs coarse clock synchronization in an ultra-wideband UWB system based on the narrowband synchronization frame and the first duration, to determine a start moment at which a UWB frame is received. The receiver device starts to receive the UWB frame from the transmitter device at the start moment at which the UWB frame is received. A frame header of the UWB frame is used for clock synchronization in the UWB system.

With reference to the second aspect, in some implementations of the second aspect, the narrowband synchronization frame includes a preamble, a synchronization sequence, and a carrier signal, the preamble is used for automatic gain control, the synchronization sequence is used to determine a time synchronization point, the carrier signal is used to determine a frequency offset estimation value, and the time synchronization point and the frequency offset estimation value are used for coarse clock synchronization in the UWB system.

With reference to the second aspect, in some implementations of the second aspect, the first parameter includes the following parameters: a baseline slot, an offset, an interval, duration of the narrowband synchronization frame, the duration for switching from a narrowband to a wideband, and bandwidth, frequency point information, and transmit power that are used to send the narrowband synchronization frame. The baseline slot and the offset are used to determine the first moment, the interval indicates an interval between two adjacent times of sending the narrowband synchronization frame, and the duration for switching from the narrowband to the wideband is used to determine the first duration.

With reference to the second aspect, in some implementations of the second aspect, before the receiver device obtains the first parameter, the method further includes: The receiver device receives a second parameter from the transmitter device. The second parameter is a parameter that is expected by the transmitter device and on which transmission of the narrowband synchronization frame is based. The receiver device sends a third parameter to the transmitter device. The third parameter is a parameter that is expected by the receiver device and on which transmission of the narrowband synchronization frame is based, and the second parameter and the third parameter are used to determine the first parameter.

With reference to the second aspect, in some implementations of the second aspect, that the receiver device obtains the first parameter includes: The receiver device receives the first parameter from the transmitter device. The receiver device determines that the first parameter is a parameter that is expected by the receiver device and on which transmission of the narrowband synchronization frame is based. The receiver device sends indication information to the transmitter device. The indication information indicates that transmission of the narrowband synchronization frame based on the first parameter is agreed on.

With reference to the second aspect, in some implementations of the second aspect, that the receiver device receives the first parameter from the transmitter device includes: The receiver device receives a narrowband system broadcast frame from the transmitter device, where the narrowband system broadcast frame includes the first parameter; or receives a configured notification frame from the transmitter device over a narrowband system connection link, where the configured notification frame includes the first parameter. The narrowband system connection link includes a link between the transmitter device and the receiver device.

With reference to the second aspect, in some implementations of the second aspect, when the receiver device receives the configured notification frame from the transmitter device over the narrowband system connection link, the method further includes: transmitting an encrypted measurement-related parameter and measurement result between the transmitter device and the receiver device over the narrowband system connection link, where the measurement-related parameter is used to determine a measurement process to be performed by the transmitter device and the receiver device, and the measurement result includes a result obtained after the transmitter device and the receiver device perform the measurement.

With reference to the second aspect, in some implementations of the second aspect, the method further includes: The receiver device determines an opening moment of a receive window based on the first moment. The opening moment of the receive window is earlier than the first moment. The receiver device opens the receive window at the opening moment of the receive window. The receive window is used to receive the narrowband synchronization frame.

With reference to the second aspect, in some implementations of the second aspect, the method further includes: The receiver device sends acknowledgment information to the transmitter device. The acknowledgment information indicates that the receiver device successfully receives the narrowband synchronization frame.

For beneficial effects of the method shown in the second aspect and the possible designs of the second aspect, refer to beneficial effects in the first aspect and the possible designs of the first aspect.

According to a third aspect, a clock synchronization apparatus is provided. The apparatus is configured to perform the method in the first aspect. Specifically, the clock synchronization apparatus may include a unit and/or a module configured to perform the method in any one of the foregoing implementations of the first aspect, for example, a processing unit and an obtaining unit.

In an implementation, the obtaining unit may be a transceiver unit. The transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

The apparatus includes: the obtaining unit, configured to obtain a first parameter, where the first parameter includes a parameter used to determine a first moment at which a narrowband synchronization frame is sent on a narrowband channel and a parameter indicating first duration for switching from a narrowband system to a wideband system; and a sending unit, configured to start to send the narrowband synchronization frame to a receiver device on the narrowband channel at the first moment, where the narrowband synchronization frame is used for coarse clock synchronization in an ultra-wideband UWB system. The sending unit is configured to start to send a UWB frame to the receiver device after the first duration after sending of the narrowband synchronization frame ends. A frame header of the UWB frame is used for fine clock synchronization in the UWB system.

With reference to the third aspect, in some implementations of the third aspect, the narrowband synchronization frame includes a preamble, a synchronization sequence, and a carrier signal, the preamble is used for automatic gain control, the synchronization sequence is used to determine a time synchronization point, the carrier signal is used to determine a frequency offset estimation value, and the time synchronization point and the frequency offset estimation value are used for coarse clock synchronization in the UWB system.

With reference to the third aspect, in some implementations of the third aspect, the first parameter includes the following parameters: a baseline slot, an offset, an interval, duration of the narrowband synchronization frame, the duration for switching from a narrowband to a wideband, and bandwidth, frequency point information, and transmit power that are used to send the narrowband synchronization frame. The baseline slot and the offset are used to determine the first moment, the interval indicates an interval between two adjacent times of sending the narrowband synchronization frame, and the duration for switching from the narrowband to the wideband is used to determine the first duration.

With reference to the third aspect, in some implementations of the third aspect, before the obtaining unit obtains the first parameter, the apparatus further includes: the sending unit, configured to send a second parameter to the receiver device. The second parameter is a parameter that is expected by the transmitter device and on which transmission of the narrowband synchronization frame is based. The receiving unit is configured to receive a third parameter from the receiver device. The third parameter is a parameter that is expected by the receiver device and on which transmission of the narrowband synchronization frame is based. That the obtaining unit obtains the first parameter includes: the processing unit, configured to determine the first parameter based on the second parameter and the third parameter.

With reference to the third aspect, in some implementations of the third aspect, the apparatus further includes: the sending unit, configured to send the first parameter to the receiver device. The receiving unit is configured to receive indication information from the receiver device. The indication information indicates that transmission of the narrowband synchronization frame based on the first parameter is agreed on.

With reference to the third aspect, in some implementations of the third aspect, the indication information includes the first parameter; or the indication information includes address information of the transmitter device and address information of the receiver device.

With reference to the third aspect, in some implementations of the third aspect, that the sending unit sends the first parameter to the receiver device includes: The sending unit broadcasts a narrowband system broadcast frame, where the narrowband system broadcast frame includes the first parameter; or sends a configured notification frame to the receiver device over a narrowband system connection link, where the configured notification frame includes the first parameter. The narrowband system connection link includes a link between the transmitter device and the receiver device.

With reference to the third aspect, in some implementations of the third aspect, when the sending unit sends the configured notification frame to the receiver device over the narrowband system connection link, the sending unit is further configured to transmit an encrypted measurement-related parameter and measurement result between the sending unit and the receiver device over the narrowband system connection link, where the measurement-related parameter is used to determine a measurement process to be performed by the transmitter device and the receiver device, and the measurement result includes a result obtained after the transmitter device and the receiver device perform the measurement.

With reference to the third aspect, in some implementations of the third aspect, the apparatus further includes: the receiving unit, configured to receive acknowledgment information from the receiver device. The acknowledgment information indicates that the receiver device successfully receives the narrowband synchronization frame.

With reference to the third aspect, in some implementations of the third aspect, the apparatus further includes: the receiving unit, configured to receive a reply UWB frame from the receiver device. The reply UWB frame indicates that receiving of the UWB frame is completed, and the reply UWB frame includes phase information of the receiver device.

For beneficial effects of the method shown in the third aspect and the possible designs of the third aspect, refer to beneficial effects in the first aspect and the possible designs of the first aspect.

According to a fourth aspect, a clock synchronization apparatus is provided. The apparatus is configured to perform the method in the second aspect. Specifically, the clock synchronization apparatus may include a unit and/or a module configured to perform the method in any one of the foregoing implementations of the second aspect, for example, a processing unit and an obtaining unit.

In an implementation, the obtaining unit may be a transceiver unit. The transceiver unit may be a transceiver or an input/output interface, and the processing unit may be at least one processor. Optionally, the transceiver may be a transceiver circuit. Optionally, the input/output interface may be an input/output circuit.

In another implementation, the transceiver unit may be an input/output interface, an interface circuit, an output circuit, an input circuit, a pin, a related circuit, or the like on a chip, a chip system, or a circuit. The processing unit may be at least one processor, a processing circuit, a logic circuit, or the like.

The apparatus includes: the obtaining unit, configured to obtain a first parameter, where the first parameter includes a parameter used to determine a first moment at which a narrowband synchronization frame is sent on a narrowband channel and a parameter indicating first duration for switching from a narrowband system to a wideband system; the receiving unit, further configured to start to receive the narrowband synchronization frame from a transmitter device on the narrowband channel at the first moment; and the processing unit, configured to perform coarse clock synchronization in an ultra-wideband UWB system based on the narrowband synchronization frame and the first duration, to determine a start moment at which an ultra-wideband UWB frame is received. The receiving unit is further configured to start to receive the UWB frame from the transmitter device at the start moment at which the UWB frame is received. A frame header of the UWB frame is used for fine clock synchronization in the UWB system.

With reference to the fourth aspect, in some implementations of the fourth aspect, the narrowband synchronization frame includes a preamble, a synchronization sequence, and a carrier signal, the preamble is used for automatic gain control, the synchronization sequence is used to determine a time synchronization point, the carrier signal is used to determine a frequency offset estimation value, and the time synchronization point and the frequency offset estimation value are used for coarse clock synchronization in the UWB system.

With reference to the fourth aspect, in some implementations of the fourth aspect, the first parameter includes the following parameters: a baseline slot, an offset, an interval, duration of the narrowband synchronization frame, the duration for switching from a narrowband to a wideband, and bandwidth, frequency point information, and transmit power that are used to send the narrowband synchronization frame. The baseline slot and the offset are used to determine the first moment, the interval indicates an interval between two adjacent times of sending the narrowband synchronization frame, and the duration for switching from the narrowband to the wideband is used to determine the first duration.

With reference to the fourth aspect, in some implementations of the fourth aspect, before the obtaining unit obtains the first parameter, the receiving unit is further configured to receive a second parameter from the transmitter device. The second parameter is a parameter that is expected by the transmitter device and on which transmission of the narrowband synchronization frame is based. The sending unit is configured to send a third parameter to the transmitter device. The third parameter is a parameter that is expected by the receiver device and on which transmission of the narrowband synchronization frame is based, and the second parameter and the third parameter are used to determine the first parameter.

With reference to the fourth aspect, in some implementations of the fourth aspect, that the obtaining unit obtains the first parameter includes: The receiving unit receives the first parameter from the transmitter device. The apparatus further includes: the processing unit, configured to determine that the first parameter is a parameter that is expected by the receiver device and on which transmission of the narrowband synchronization frame is based. The sending unit is configured to send indication information to the transmitter device. The indication information indicates that transmission of the narrowband synchronization frame based on the first parameter is agreed on.

With reference to the fourth aspect, in some implementations of the fourth aspect, that the receiving unit receives the first parameter from the transmitter device includes: The receiving unit receives a narrowband system broadcast frame from the transmitter device, where the narrowband system broadcast frame includes the first parameter; or receives a configured notification frame from the transmitter device over a narrowband system connection link, where the configured notification frame includes the first parameter. The narrowband system connection link includes a link between the transmitter device and the receiver device.

With reference to the fourth aspect, in some implementations of the fourth aspect, when the receiving unit receives the configured notification frame from the transmitter device over the narrowband system connection link, the receiving unit is further configured to transmit an encrypted measurement-related parameter and measurement result between the receiving unit and the transmitter device over the narrowband system connection link, where the measurement-related parameter is used to determine a measurement process to be performed by the transmitter device and the receiver device, and the measurement result includes a result obtained after the transmitter device and the receiver device perform the measurement.

With reference to the fourth aspect, in some implementations of the fourth aspect, the apparatus further includes: the processing unit, configured to calculate the time synchronization point and the frequency offset estimation value based on the narrowband synchronization frame. The processing unit is configured to perform coarse clock synchronization in the UWB system based on the time synchronization point and the frequency offset estimation value.

With reference to the fourth aspect, in some implementations of the fourth aspect, the apparatus further includes: the processing unit, configured to determine an opening moment of a receive window based on the first moment. The opening moment of the receive window is earlier than the first moment. The receiver device opens the receive window at the opening moment of the receive window. The receive window is used to receive the narrowband synchronization frame.

With reference to the fourth aspect, in some implementations of the fourth aspect, the apparatus further includes: the sending unit, configured to send acknowledgment information to the transmitter device. The acknowledgment information indicates that the receiver device successfully receives the narrowband synchronization frame.

For beneficial effects of the apparatus shown in the fourth aspect and the possible designs of the fourth aspect, refer to beneficial effects in the second aspect and the possible designs of the second aspect.

According to a fifth aspect, this application provides a processor, configured to perform the method according to each of the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable storage medium stores program code executed by a device, and the program code is used to perform the method in any one of the implementations of the first aspect and the second aspect.

According to a seventh aspect, a computer program product including instructions is provided. When the computer program product runs on a computer, the computer is enabled to perform the method in any one of the implementations of the first aspect and the second aspect.

According to an eighth aspect, a chip is provided. The chip includes a processor and a communication interface, and the processor reads, through the communication interface, instructions stored in a memory, to perform the method in any one of the implementations of the first aspect and the second aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method in any one of the implementations of the first aspect and the second aspect.

According to a ninth aspect, a communication system is provided, and includes the clock synchronization apparatus in the third aspect and the clock synchronization apparatus in the fourth aspect.

### BRIEF DESCRIPTION OF DRAWINGS

FIG. 1 is a diagram of two application scenarios according to this application;
FIG. 2 is a diagram of a structure of a PPDU, in a UWB system, defined by a standard;
FIG. 3 is a diagram of an architecture of a ranging/positioning system according to an embodiment of this application;
FIG. 4 is a diagram of a UWB ranging method according to an embodiment of this application;
FIG. 5 is a diagram of a signal receiving/sending procedure of a UWB system;
FIG. 6 is a schematic flowchart of a clock synchronization method according to an embodiment of this application;
FIG. 7 is a diagram of a frame format of a narrowband synchronization frame according to an embodiment of this application;
FIG. 8 is a diagram of completing clock synchronization in a wideband system according to an embodiment of this application;
FIG. 9 is another diagram of completing clock synchronization in a wideband system according to an embodiment of this application;
FIG. 10 is a block diagram of a clock synchronization apparatus according to an embodiment of this application; and
FIG. 11 is a block diagram of a communication device according to an embodiment of this application.

### DESCRIPTION OF EMBODIMENTS

The following describes technical solutions in this application with reference to accompanying drawings.

Embodiments of this application may be applied to an ultra-wideband (Ultra-WideBand, UWB) technology-based wireless personal area network (wireless personal area network, WPAN). Currently, a standard for the WPAN is the Institute of Electrical and Electronics Engineers (Institute of Electrical and Electronics Engineers, IEEE) 802.15 series. The WPAN may be used for communication between digital auxiliary devices in a small range, for example, a telephone, a computer, and an auxiliary device, and a working range of the WPAN is usually within l0 m. Technologies supporting the wireless personal area network include Bluetooth (Bluetooth), ZigBee (ZigBee), ultra-wideband, IrDA infrared (infrared) connection technology, HomeRF, and the like. A person skilled in the art easily understands that, various aspects in this application may be extended to another network using various standards or protocols, for example, a wireless local area network (Wireless Local Area Network, WLAN), a high performance radio LAN (High Performance Radio LAN, HIPERLAN) (a wireless standard similar to the IEEE 802.11 standard, mainly used in Europe), a wide area network (WAN), or another network that is currently known or developed in the future. From a perspective of network composition, the WPAN is located at a bottom layer of an entire network architecture and is for a wireless connection between devices in a small range, that is, a point-to-point short-range connection, and may be considered as a short-range wireless communication network. Based on different application scenarios, WPANs are further classified into a high rate (high rate, HR)-WPAN and a low rate (low rate)-WPAN. The HR-WPAN may be used to support various high-rate multimedia applications, including high-quality sound image delivery, multi-megabyte music and picture document transmission, and the like. The LR-WPAN may be used for common services in daily life.

In the WPAN, devices may be classified into a full-function device (full-function device, FFD) and a reduced-function device (reduced-function device, RFD) based on communication capabilities of the devices. The FFD devices can communicate with each other, and the FFD device and the RFD device can communicate with each other. The RFD devices cannot directly communicate with each other, and can only communicate with the FFD devices, or forward data externally by using one FFD device. The FFD device associated with the RFD is referred to as a coordinator (coordinator) of the RFD. The RFD device is mainly used for a simple control application, like a light switch and a passive infrared sensor. A small amount of data is transmitted, and a small quantity of transmission resources and communication resources are occupied. Therefore, costs of the RFD device are low. The coordinator may also be referred to as a personal area network (personal area network, PAN) coordinator, a central control node, or the like. The PAN coordinator is a main control node of an entire network, and each self-organizing network can have only one PAN coordinator which has a member identity management, link information management, and packet forwarding function. Optionally, the device in embodiments of this application may be a device that supports a plurality of WPAN standards such as 802.15.4a, 802. 15.4z, and a currently discussed version or a later version.

In embodiments of this application, the device may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (which is also referred to as a main memory). The operating system may be any one or more types of computer operating systems that implement service processing via a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not particularly limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that is in the FFD or the RFD and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to: a magnetic storage component (for example, a hard disk, a floppy disk or a magnetic tape), an optical disc (for example, a compact disc (compact disc, CD), a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, include, and/or carry instructions and/or data.

Alternatively, embodiments of this application are applicable to a wireless local area network system, for example, an Internet of things (Internet of things, loT) or a vehicle-to-everything (Vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The foregoing communication systems applicable to this application are merely examples for descriptions, and the communication systems applicable to this application are not limited thereto. This is uniformly described herein, and details are not described below again.

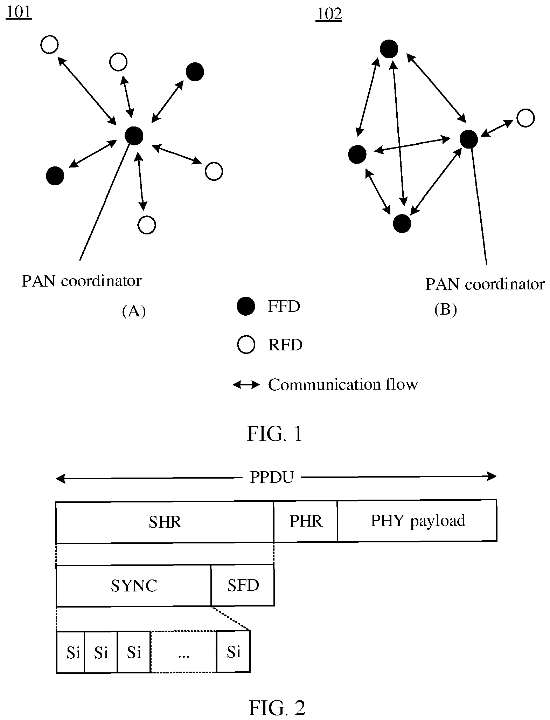

FIG. 1 is a diagram of two application scenarios according to this application. In a system 101 shown in (A) in FIG. 1, a plurality of FFD devices and a plurality of RFD devices form a communication system with a star topology (star topology), where one FFD is a PAN controller. In the communication system with the star topology, the PAN controller performs data transmission with one or more other devices, that is, a one-to-many or many-to-one data transmission architecture may be set up between a plurality of devices. In a system 102 shown in (B) in FIG. 1, a plurality of FFD devices and one RFD device form a communication system with a peer-to-peer topology (peer-to-peer topology), where one FFD is a PAN controller. In the communication system with the peer-to-peer topology, a many-to-many data transmission architecture may be set up between a plurality of different devices.

It should be understood that (A) in FIG. 1 and (B) in FIG. 1 are merely simplified diagrams for ease of understanding, and do not constitute a limitation on an application scenario of this application. For example, the system 101 and/or the system 102 may further include another FFD and/or another RFD.

For ease of understanding of the technical solutions in embodiments of this application, some terms or concepts that may be used in embodiments of this application are first briefly described.
1. UWB technology: The UWB technology is a wireless carrier communication technology that uses nanosecond-level non-sine wave narrow pulses to transmit data, and occupies a wide frequency spectrum range. Due to a narrow impulse and extremely low radiation spectral density of the UWB technology, a UWB system has advantages of a strong multi-path resolution capability, low power consumption, high confidentiality, and the like, and is conducive to coexistence with another system, to improve spectral utilization and a system capacity.
   As the Federal Communications Commission (Federal Communications Commission, FCC) approved entry of the UWB technology into the civil field in 2002, ultra-wideband wireless communication has become one of the popular physical layer technologies for short-range and high-speed wireless networks. Many world-renowned companies, research institutes, and standardization organizations are actively engaged in the research, development, and standardization of ultra-wideband wireless communication technologies. The Institute of Electrical and Electronics Engineers (Institute of Electrical and Electronic Engineers, IEEE) has incorporated the UWB technology into its IEEE 802 series wireless standards, and has released a UWB technology-based WPAN standard IEEE 802.15.4a and evolution version IEEE 802.15.4z. Currently, a next-generation UWB technology-based WPAN standard 802.15.4ab has been put on the agenda.
2. Time division multiple access (Time Division Multiple Access, TDMA): the time division multiple access is a communication technology used to share a transmission medium or a network. A plurality of users are allowed to use a same frequency in different time slices (for example, slots, symbols, and frames). The users transmit in rapid succession, one after the other, each using a slot of the user. The TDMA technology allows a plurality of users to share a same transmission medium (for example, a radio frequency).
3. TDMA slot allocation: A condition for a network to access a channel in a TDMA manner is that all nodes in the network maintain slot synchronization. After slot synchronization is implemented in the entire network, how to effectively allocate slots so that the system can obtain better performance needs to be taken into consideration. Specifically, in a TDMA frame structure, one TDMA frame includes several subframes, and one subframe includes several slots. All or a part of slots in the TDMA frame structure may be allocated to a plurality of users based on data traffic that the users need, so that each user has a different slot. This ensures that signals of the users do not interfere with each other.

In addition, in the TDMA manner, slots of each user may simultaneously be uplink and downlink.

It should be understood that a TDMA slot allocation method is not limited in embodiments of this application. For details, refer to a current allocation algorithm or a TDMA slot allocation method proposed in a future communication technology.

4. Personal area network (Personal Area Network, PAN): The personal area network is a "personal small range" information network that uses new short-range radio technologies. The "personal small range" includes but is not limited to a home or an office of a user, or a range between information devices carried by the user.

The personal area network may be regarded as a wireless local area network with a smaller coverage area than the wireless personal area network (Wireless Personal Area Network, WPAN). The core idea of the personal area network is to replace conventional wired cable transmission with radio transmission, implement intelligent interconnection of personal information terminals, and construct a personalized information network, for example, a wireless connection between home entertainment devices, a wireless connection between a computer and a peripheral device of the computer, and a connection between a cellular phone and a Bluetooth headset.

5. UWB ranging and/or positioning: With development of indoor positioning technologies, UWB ranging and/or positioning technologies are widely applied. In the UWB, a pulse whose pulse width is at only a nanosecond level is used as a basic signal of the UWB. The UWB features a high transmission rate, a large system capacity, large spectrum bandwidth, and low power spectrum density, and can coexist with an existing system of short-range communication and the like. Due to the features of the UWB, the UWB has high time resolution, a strong anti-multipath capability, and high ranging and positioning precision at a centimeter level. It has become a research hotspot to implement ranging and positioning in a complex multipath environment.

Usually, a UWB system has a high sampling rate, high power consumption, and complex construction of a personal area network, and supports communication and ranging functions of the personal area network. Working for a long time, the UWB system causes high power consumption. Therefore, narrowband signals such as near field communication (Near Field Communication, NFC), Bluetooth low energy (Bluetooth Low Energy, BLE), and Wi-Fi are usually used as drivers to wake up the UWB system in a scenario required by a user. After being woken up, the UWB system constructs a personal area network, allocates TDMA slots, and implements the required ranging and positioning functions.

During actual ranging and positioning application of the UWB system, a manner of time of arrival (Time of Arrival, TOA) or a time difference of arrival (Time Difference of Arrival, TDOA) is usually used to implement tasks such as ranging and positioning. In an operating process of the system, a personal area network needs to be constructed. In a process of constructing the personal area network, time synchronization between devices needs to be completed. In a ranging process, preamble synchronization and symbol synchronization (coarse synchronization and fine synchronization) need to be performed. Corresponding demodulation, decoding, and ranging time calculation can be performed only after signal synchronization. Consequently, a design of the system is complex and processing is difficult.

6. Coarse clock synchronization and fine clock synchronization based on a UWB frame: Coarse clock synchronization may also be referred to as preamble synchronization (or coarse synchronization), and fine clock synchronization may also be referred to as symbol synchronization (or fine synchronization). The following describes in detail a clock synchronization process based on a UWB frame with reference to FIG. 2.

Specifically, the UWB technology does not need to use a carrier in a conventional communication standard, but transmits data by sending and receiving an extremely narrow pulse at a nanosecond or lower level. Therefore, synchronization between a receiver device and a transmitter device by using the UWB technology is crucial in the UWB technology. The synchronization between the receiver device and the transmitter device may be understood as that a physical layer protocol data unit (physical layer protocol data unit, PPDU) is sent in a form of a pulse signal, and a receiver determines, from a plurality of received pulse signals, a specific pulse signal from which the PPDU to be received by the receiver starts. Currently, the synchronization between the receiver device and the transmitter device is mainly implemented via a synchronization header (synchronization header, SHR) of the PPDU. Specifically, the receiver may perform correlation detection on the synchronization header, to determine, from the plurality of received pulse signals, a specific pulse signal from which the PPDU to be received by the receiver starts.

FIG. 2 is a diagram of a structure of a PPDU, in a UWB system, defined by a standard. As shown in FIG. 2, the PPDU includes an SHR, a physical header (physical header, PHR), and a physical layer (physical layer, PHY) payload field (payload field). The SHR is used by a receiver to perform PPDU detection and synchronization. Specifically, the receiver may detect, based on the SHR, whether a transmitter sends a PPDU and a start location of the PPDU, where the PHR carries physical layer indication information, for example, modulation and coding information, a PPDU length, and a receiver of the PPDU, to assist the receiver in correctly demodulating data, and the physical layer payload field carries transmitted data. FIG. 2 further shows a specific structure of the SHR. The SHR includes a synchronization (synchronization, SYNC) field and a start-of-frame delimiter (start-of-frame delimiter, SFD) field. The SYNC field includes a plurality of repeated basic symbols. The basic symbol is generated based on a preamble sequence. The preamble sequence is a ternary sequence including three values {-1, 0, 11, and is also referred to as an Ipatov sequence.

A periodic autocorrelation function of the Ipatov sequence has a value only at an origin, and is 0 at other places. Based on an autocorrelation feature, the receiver may use a same sequence to correlate with a received signal, and implement coarse clock synchronization based on information such as a correlation peak value location.

For example, the receiver detects a correlation result between a predefined sequence and the received signal. When a periodic peak value occurs in the correlation result, a synchronization header of a PPDU is received, and the receiver may determine a start location of the PPDU based on a location of the peak value. The receiver may determine, based on a PHR field, a length of the PPDU and whether data in the PPDU is data transmitted by the transmitter to the receiver. When the data in the PPDU is the data transmitted to the receiver, the receiver may further parse a physical layer payload field in the PPDU, to obtain the data sent by the transmitter. When the data in the PPDU is not the data transmitted to the receiver, the receiver does not parse a physical layer payload field in the PPDU. After coarse synchronization is completed, a UWB signal that is normally captured and found is detected, and an SYNC part, namely, a preamble part, continues to be used to complete fine synchronization.

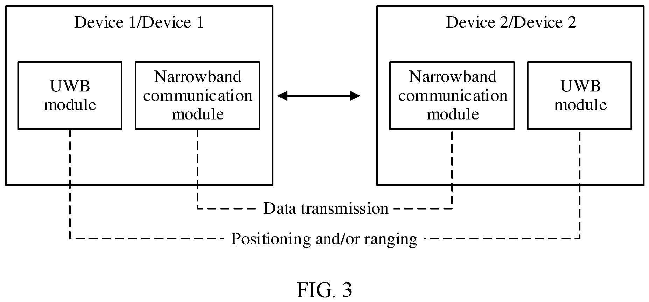

7. Ranging/Positioning system: For ease of understanding, the ranging and positioning system to which the foregoing ranging technology is applied is briefly described with reference to FIG. 3. FIG. 3 is a diagram of an architecture of a ranging/positioning system according to an embodiment of this application As shown in FIG. 3, the ranging/positioning system includes a plurality of devices (for example, a device 1 and a device 2 in FIG. 3), and may be an apparatus in embodiments of this application. Each device includes at least a UWB module and a narrowband communication module. Positioning and/or ranging may be performed between the UWB modules in the device 1 and the device 2, and data transmission may be performed between the narrowband communication modules in the device 1 and the device 2 over a radio link.

In this application, the UWB module may be understood as an apparatus, a chip, a system, or the like that implements a UWB wireless communication technology. Correspondingly, the narrowband communication module may be understood as an apparatus, a chip, a system, or the like that implements a narrowband communication technology (for example, Wi-Fi, Bluetooth, or ZigBee (a ZigBee protocol)). In one device (device), a UWB module and a narrowband communication module may be different apparatuses or chips. It is clear that the UWB module and the narrowband communication module may alternatively be integrated into one apparatus or chip. Embodiments of this application do not limit implementations of the UWB module and the narrowband communication module in the device. The UWB technology can enable a communication apparatus to have a high data throughput and enable apparatus positioning to have high precision.

The device in this application may be a wireless communication chip, a wireless sensor, or a wireless communication terminal, for example, a user terminal, a user apparatus, an access apparatus, a subscriber station, a subscriber unit, a mobile station, a user agent, and user equipment that support a Wi-Fi communication function. The user terminal may include various devices with a wireless communication function, for example, a handheld device, a vehicle-mounted device, a wearable device, an Internet of Things (Internet of things, loT) device, a computing device, or another processing device connected to a wireless modem, user equipment (user equipment, UE) of various forms, a mobile station (mobile station, MS), a terminal (terminal), terminal equipment (terminal equipment), a portable communication device, a handheld device, a portable computing device, an entertainment device, a game device or system, a global positioning system device, any other suitable device configured for network communication via a wireless medium, and the like. In addition, the device supports the 802.15.4ab standard or a next-generation standard of 802.15.4ab. The device further supports a plurality of standards such as 802.15.4a, 802.15.4-2011, 802.15.4-2015, and 802.15.4z. The device may further support a plurality of wireless local area network (wireless local area network, WLAN) standards of the 802.11 family like 802.11ax, 802.11ac, 802.11n, 802.11g, 802.11b, 802.11a, and a next generation of 802.11be.

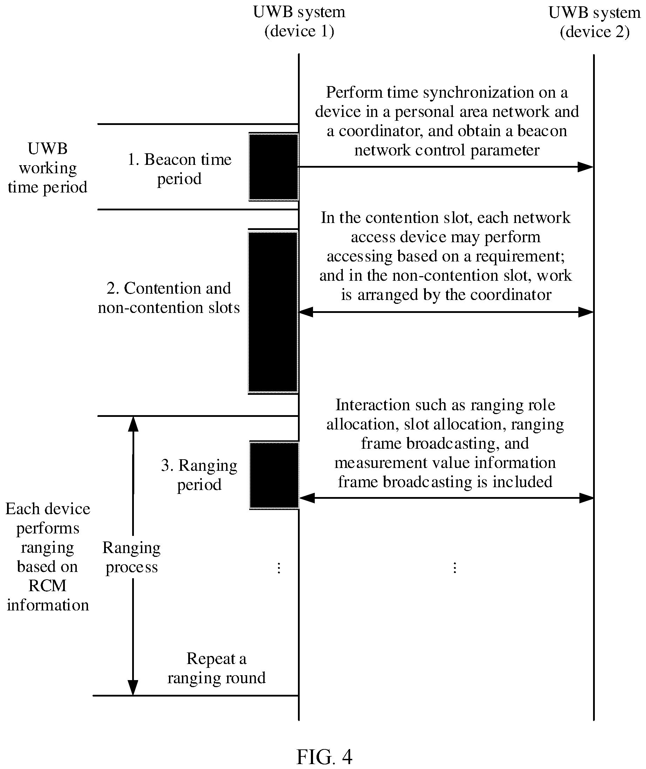

8. Ranging procedure: For ease of understanding, the following briefly describes a UWB ranging method with reference to FIG. 4. FIG. 4 is a diagram of a UWB ranging method according to an embodiment of this application.

It can be seen from FIG. 4 that the UWB ranging procedure includes two processes (for example, a UWB working time period and a ranging process (ranging period) shown in FIG. 4).

The UWB working time period includes a ranging beacon (ranging beacon) time period, a ranging contention access period (Ranging Contention Access Period, RCAP) time period, and a ranging contention free period (Ranging Contention Free Period, RCFP) time period. The ranging beacon is used for time synchronization of a UWB personal area network and parameter broadcasting of the network. The RCAP is a contention period, to implement network access (for example, accessing to the personal area network) of a device. The RCFP is a non-contention period, to implement slot allocation that interaction between devices needs.

The ranging period is a process in which each device performs ranging based on information about a ranging control message (Ranging Control Message, RCM). The RCM is a ranging control frame and is responsible for managing the ranging period time period.

In FIG. 4, it is assumed that in the beacon time period, the device 1 is defined as a coordinator, and is responsible for sending a beacon frame, to implement parameter broadcasting of a personal area network and time synchronization. After receiving the beacon frame, the device 2 accesses the personal area network of the device 1 based on a requirement.

In a contention and non-contention phase, the device 1 may indicate, via a beacon, whether the contention and non-contention phase is needed. If the phase is needed, another device may access, in the phase, the personal area network constructed by the device 1. If the phase is not needed, the current personal area network and related devices in the personal area network are maintained.

In the ranging process, four roles are defined: a controller (controller) and a ranging initiator (initiator) served by the device 1; and a controlee (controlee) and a ranging responder (responder) served by the device 2. The device 1 implements ranging with the device 2. The controller is responsible for sending a ranging control frame, including role definition and slot allocation control, that is, determining which devices are initiators and which devices serve are responders. The ranging process is allocating, based on TDMA, each time slice in each time period via the ranging control frame.

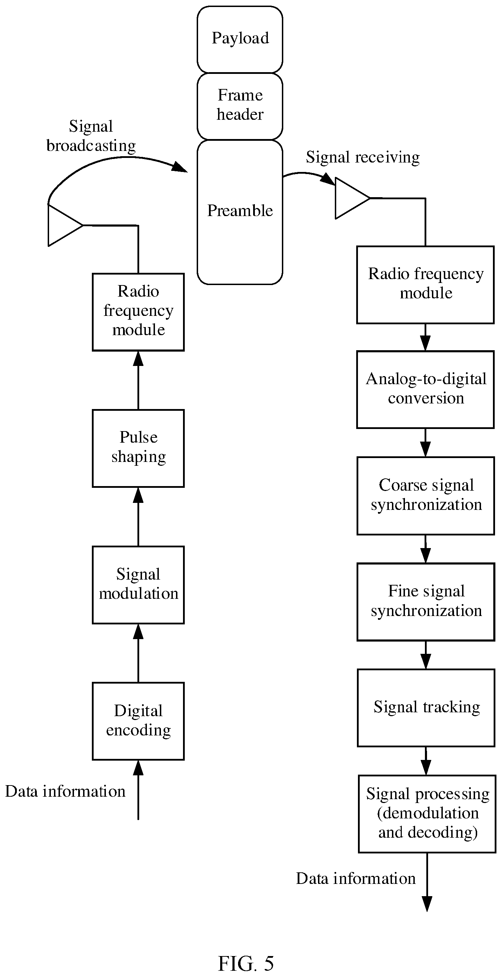

The UWB ranging procedure includes the following steps:
Step 1: In a beacon phase, the beacon frame is sent, to implement definition of the personal area network, time synchronization, and the like. A time synchronization manner is shown in FIG. 5. FIG. 5 is a diagram of a signal receiving/sending procedure of a UWB system.

It can be seen from FIG. 5 that, after completing signal encoding and modulation, the transmitter broadcasts a signal. The receiver performs coarse synchronization on a preamble, and then performs fine synchronization on a frame header part. Corresponding signal processing like tracking, demodulation, and decoding may be performed on a synchronized signal.

Step 2: In the contention and non-contention phases, access to the network by the device and interaction with a specified device are completed.

Step 3: In the ranging process, the ranging control frame is transmitted first, time allocation is performed based on TDMA, and roles are defined. Then, the initiator initiates an initial ranging frame. After receiving the initial ranging frame, the responder feeds back a ranging frame to the initiator. Finally, the devices calculate time of flight of ranging frames, to complete ranging between the devices. The ranging result is broadcast via UWB.

The foregoing steps are repeated for a new ranging round.

In the foregoing steps, procedures such as coarse synchronization, fine synchronization, and tracking need to be performed on processing of receiving a signal by the receiver. This application mainly relates to signal synchronization, and does not constitute a limitation on another step. For details, refer to descriptions in a current related technology. Details are not described herein again.

It can be learned from the UWB ranging method that current clock synchronization in the UWB system has the following problems:
(1) Coarse synchronization is performed based on the preamble of the UWB frame, and fine synchronization is performed based on the frame header part of the UWB frame. The synchronization process is excessively complex, and it takes long time to implement clock synchronization in the UWB system.
(2) Because the UWB frame that can implement coarse synchronization and fine synchronization needs to be transmitted, an overall transmission delay of the UWB frame is long, and waste of air interface resources is caused.

The foregoing describes the scenario to which embodiments of this application can be applied with reference to FIG. 1, and briefly describes the problems existing in signal synchronization in the current UWB ranging/positioning method. This application provides a clock synchronization method, to resolve the problems existing in the UWB ranging method. A narrowband synchronization frame is sent via a narrowband system, to complete coarse clock synchronization in a wideband system; and a wideband frame is sent after duration, allocated by the narrowband system, for switching from a narrowband to a wideband ends, to complete fine clock synchronization in the wideband system, so as to reduce complexity of clock synchronization in the wideband system. The following describes in detail the clock synchronization method provided in this application with reference to the accompanying drawings.

A specific structure of an execution body of the method provided in embodiments of this application is not particularly limited in the following embodiments, provided that a program that records code of the method provided in embodiments of this application can be run to perform communication according to the method provided in embodiments of this application. For example, the method provided in embodiments of this application may be performed by a transceiver device, or a functional module that is in a transceiver device and that can invoke and execute the program.

For ease of understanding of embodiments of this application, the following descriptions are provided.

First, in this application, the term "indicate" may include a direct indication and an indirect indication. When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information.

Second, "at least one" shown in this application means one or more, and "a plurality of" means two or more. In addition, "first", "second", and various numerical numbers (for example, "#1" and "#2") in embodiments of this application are merely used to distinguish between objects for ease of description, but are not intended to limit the scope of embodiments of this application. Sequence numbers of the following processes do not mean execution sequences. The execution sequences of the processes should be determined based on functions and internal logic of the processes, and should not be construed as any limitation on the implementation processes in embodiments of this application. It should be understood that objects described in this way may be interchangeable in proper circumstances, so that solutions other than embodiments of this application can be described. In addition, in embodiments of this application, words such as "1010", "1020", and "1110" are merely identifiers for ease of description, and do not limit a sequence of performing steps.

Third, in embodiments of this application, a word such as "example" or "for example" is used to represent giving an example, an illustration, or a description. Any embodiment or design scheme described as "example" or "for example" in this application should not be explained as being more preferred or having more advantages than another embodiment or design scheme. To be precise, use of the word such as "example" or "for example" is intended to present a relative concept in a specific manner.

Fourth, "storage" in embodiments of this application may be being stored in one or more memories. The one or more memories may be separately disposed, or may be integrated into an encoder, a decoder, a processor, or a communication apparatus. Alternatively, some of the one or more memories may be separately disposed, and some may be integrated into a decoder, a processor, or a communication apparatus. A type of the memory may be a storage medium in any form. This is not limited in this application.

Fifth, a "protocol" in embodiments of this application may be a standard protocol in the communication field, for example, may include a Wi-Fi protocol, and a related protocol applied to a future communication system. This is not limited in this application.

Sixth, in embodiments of this application, "of (of)", "corresponding, relevant (corresponding, relevant)", "corresponding (corresponding)", and "associate (associate)" may sometimes be mixed for use. It should be noted that, when a difference between the terms is not emphasized, meanings to be expressed are consistent.

Seventh, the term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between associated objects.

Without loss of generality, the following describes in detail the clock synchronization method provided in embodiments of this application by using interaction between a transmitter device and a receiver device as an example.

By way of example rather than limitation, the transmitter device may be a device with a communication capability in a WPAN, for example, an FFD or an RFD. Similarly, the receiver device may also be a device with a communication capability in a WPAN, for example, an FFD or an RFD. It should be understood that specific types of the transmitter device and the receiver device are not limited in the following embodiments of this application, provided that steps performed by the transmitter device and the receiver device in the following embodiments can be performed.

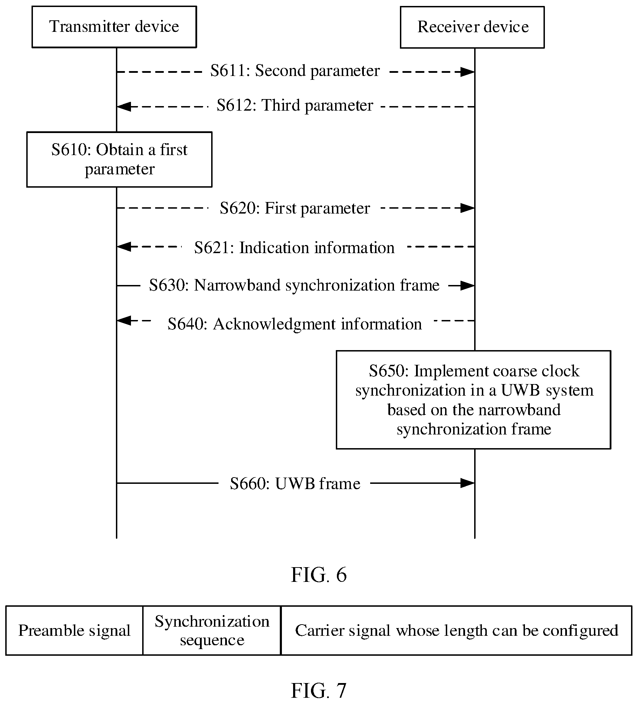

FIG. 6 is a schematic flowchart of a clock synchronization method according to an embodiment of this application. The method includes the following steps:
S610: A transmitter device obtains a first parameter.

Specifically, the first parameter includes a parameter used to determine a first moment at which a narrowband synchronization frame is sent on a narrowband channel and a parameter indicating first duration for switching from a narrowband system to a wideband system.

For example, the first parameter includes parameters such as a baseline slot, an offset, an interval, duration of the narrowband synchronization frame, duration for switching from a narrowband to a wideband, and bandwidth, frequency point information, and transmit power that are used to send the narrowband synchronization frame. The baseline slot and the offset are used to determine the first moment, the interval indicates an interval between two adjacent times of sending the narrowband synchronization frame, and the duration for switching from the narrowband to the wideband is used to determine the first duration.

For example, the baseline slot, the offset, and the first moment meet the following relationship:
the baseline slot + the offset = the first moment, which may be understood as that the narrowband synchronization frame is sent on the narrowband channel when a moment obtained by adding the baseline slot to the offset arrives. The baseline slot indicates a baseline slot on which sending of the narrowband synchronization frame is based.

For example, the duration for switching from the narrowband to the wideband being duration #1 (for example, 1 ms) indicates that the duration for switching from the narrowband system to the wideband system is 1 ms.

For example, the interval being 10 ms indicates that the interval between two adjacent times of sending the narrowband synchronization frame is 10 ms. It may be understood that a sending period of sending the narrowband synchronization frame is 10 ms. For example, duration between start moments of the two adjacent times of sending the narrowband synchronization frame is 10 ms. For another example, duration between end moments of the two adjacent times of sending the narrowband synchronization frame is 10 ms.

Optionally, the frequency point information included in the first parameter indicates a frequency point at which the narrowband synchronization frame is sent. In an embodiment, frequency points that hop may be used for transmission of the narrowband synchronization frame in the narrowband system. For example, the first parameter indicates that frequency points at which the narrowband synchronization frame is sent are frequency points that hop.

It should be understood that the parameters included in the first parameter are merely examples, and do not constitute any limitation on the protection scope of this application. For example, a parameter that is included in the first parameter and that is used to determine a parameter of the first moment at which the narrowband synchronization frame is sent on the narrowband channel may be another parameter, for example, a parameter directly indicating the first moment, other than the baseline slot and the offset. For another example, the first parameter may not include parameters such as the bandwidth, the frequency point information, and the transmit power that are used to send the narrowband synchronization frame. For example, the transmitter device may send the narrowband synchronization frame via bandwidth, frequency point information, and transmit power that are used to transmit a historical narrowband frame.

In a possible implementation, in this embodiment, a manner in which the transmitter device obtains the first parameter may be receiving the first parameter from another device (for example, a positioning management device).

In another possible implementation, in this embodiment, a manner in which the transmitter device obtains the first parameter may be that the transmitter device locally stores a plurality of sets of available parameters, and randomly selects one of the plurality of sets of available parameters as the first parameter.

In still another possible implementation, in this embodiment, a manner in which the transmitter device obtains the first parameter may be pre-configured. For example, it is predefined in a protocol that a parameter required for implementation of clock synchronization is the first parameter.

In yet another possible implementation, in this embodiment, a manner in which the transmitter device obtains the first parameter may be that the transmitter device determines the first parameter based on a parameter that is expected by the transmitter device and on which transmission of the narrowband synchronization frame is based and a parameter that is expected by the receiver device and on which transmission of the narrowband synchronization frame is based.

In this implementation, the transmitter device and the receiver device may negotiate a parameter that is expected by the two parties and on which transmission of the narrowband synchronization frame is based. The method procedure shown in FIG. 6 further includes the following steps:
S611: The transmitter device sends a second parameter to the receiver device. In other words, the receiver device receives the second parameter from the transmitter device.

Specifically, the second parameter is a parameter that is expected by the transmitter device and on which transmission of the narrowband synchronization frame is based.

For example, the transmitter device sends a configured request frame to the receiver device. The request frame includes the parameter that is expected by the transmitter device and on which transmission of the narrowband synchronization frame is based.

S612: The receiver device sends a third parameter to the transmitter device. In other words, the transmitter device receives the third parameter from the receiver device.

Specifically, the third parameter is a parameter that is expected by the receiver device and on which transmission of the narrowband synchronization frame is based.

For example, the receiver device sends a configured reply frame to the transmitter device. The reply frame includes the parameter that is expected by the receiver device and on which transmission of the narrowband synchronization frame is based.

For example, the third parameter is determined by the receiver device based on the received second parameter. For example, after receiving the second parameter, the receiver device learns of the parameter that is expected by the transmitter device and on which transmission of the narrowband synchronization frame is based; and when determining the parameter that is expected by the receiver device and on which transmission of the narrowband synchronization frame is based, the receiver device selects, based on a value of the second parameter, a parameter that is more likely to be accepted by the transmitter device.

In this implementation, S610 may be understood as that the transmitter device determines the first parameter based on the second parameter and the third parameter.

It should be understood that the foregoing is merely examples for describing possible implementations in which the transmitter device obtains the first parameter in this embodiment, and does not constitute any limitation on the protection scope of this application. A manner in which the transmitter device obtains the first parameter is not limited in embodiments of this application.

Specifically, it can be learned from the foregoing that the first parameter includes parameters indicating how to transmit the narrowband synchronization frame and a UWB frame. The receiver device also needs to obtain the first parameter, to correctly receive the narrowband synchronization frame and the UWB frame. Specifically, a manner in which the receiver device obtains the first parameter is similar to the foregoing manner in which the transmitter device obtains the first parameter. For ease of understanding, this embodiment is described by using an example in which the receiver device receives the first parameter from the transmitter device. The method procedure shown in FIG. 6 further includes the following step:
S620: The transmitter device sends the first parameter to the receiver device. In other words, the receiver device receives the first parameter from the transmitter device.

In a possible implementation, the transmitter device sending the first parameter to the receiver device may be broadcasting a narrowband system broadcast frame, where the narrowband system broadcast frame includes the first parameter.

For example, the transmitter device sends the narrowband system broadcast frame, including a basic broadcast frame and an extended broadcast frame. The extended broadcast frame carries the first parameter.

In this implementation, the baseline slot included in the first parameter may be understood as a broadcast baseline slot included in the extended broadcast frame.

In another possible implementation, the transmitter device sending the first parameter to the receiver device may be sending a configured notification frame to the receiver device over a narrowband system connection link, where the configured notification frame includes the first parameter.

For example, the narrowband system connection link is set up between the transmitter device and the receiver device. The transmitter device sends the configured request frame based on the narrowband system connection link. The request frame includes the first parameter.

In this implementation, the baseline slot included in the first parameter may be understood as a connection baseline slot included in the configured notification frame.

Optionally, the transmitter device sending the first parameter to the receiver device may be determining the first parameter based on the parameter that is expected by the two parties and on which transmission of the narrowband synchronization frame is based, and then sending the first parameter to the receiver device.

Alternatively, optionally, the transmitter device sending the first parameter to the receiver device may be a procedure in which the transmitter device sends the obtained first parameter to the receiver device without negotiation (for example, S612 and S613 are not performed).

For example, after receiving the first parameter, the receiver device may notify, via indication information, the transmitter device whether the received first parameter is appropriate. The method procedure shown in FIG. 6 further includes the following step:
S621: The receiver device sends the indication information to the transmitter device. In other words, the transmitter device receives the indication information from the receiver device.

Specifically, the indication information indicates that transmission of the narrowband synchronization frame based on the first parameter is agreed on.

In a possible implementation, the indication information includes the first parameter and indicates that the receiver device agrees to transmit the narrowband synchronization frame based on the first parameter.

In another possible implementation, the indication information includes address information of the transmitter device and address information of the receiver device.

Further, after obtaining the first parameter, the transmitter device and the receiver device may transmit, based on the first parameter, the narrowband synchronization frame and the UWB frame that are used for clock synchronization. The method procedure shown in FIG. 6 further includes the following step:
S630: The transmitter device sends the narrowband synchronization frame to the receiver device. In other words, the receiver device receives the narrowband synchronization frame from the transmitter device.

Specifically, the transmitter device starts to send the narrowband synchronization frame to the receiver device on the narrowband channel at the first moment, where the narrowband synchronization frame is used to determine a start moment at which the UWB frame is received.

Optionally, the receiver device determining the start moment at which the UWB frame is received may be understood as that the receiver device performs coarse clock synchronization in a UWB system. In this application, determining the start moment at which the UWB frame is received and performing coarse clock synchronization in the UWB system have the same meaning, and may be interchangeable.

That the narrowband synchronization frame is used to determine the start moment at which the UWB frame is received is specifically as follows: The receiver device may obtain a time synchronization point and a frequency offset estimation value via the narrowband synchronization frame, to calculate a start moment at which the UWB frame is transmitted, so as to receive the UWB frame.

In a possible implementation, a frame format of the narrowband synchronization frame in this embodiment includes a synchronization sequence and a carrier signal, the synchronization sequence is used to determine the time synchronization point, the carrier signal is used to determine the frequency offset estimation value, and the time synchronization point and the frequency offset estimation value are used to determine the start moment at which the UWB frame is received.

In a possible implementation, the frame format of the narrowband synchronization frame in this embodiment includes a preamble (which is also referred to as a preamble signal), the synchronization sequence, and the carrier signal.

Optionally, in this embodiment, the carrier signal included in the frame format of the narrowband synchronization frame may be a carrier signal whose length can be configured. For ease of understanding, the narrowband synchronization frame in embodiments of this application is briefly described with reference to FIG. 7. FIG. 7 is a diagram of a frame format of a narrowband synchronization frame according to an embodiment of this application.

It can be learned from FIG. 7 that the narrowband synchronization frame includes the preamble signal, the synchronization sequence, and the carrier signal whose length can be configured. The preamble sequence indicates a sequence alternating between [1, 0], and is used for automatic gain control. The synchronization sequence indicates a generated random sequence that is used to obtain the time synchronization point. The carrier signal whose length can be configured indicates that a sine wave signal whose length is not modulated can be configured, and is used to calculate the frequency offset estimation value.

It should be noted that FIG. 7 merely provides an example of a possible format of the narrowband synchronization frame in embodiments of this application, and does not constitute any limitation on the protection scope of this application. Any narrowband synchronization frames that can be used for coarse clock synchronization in the UWB system falls within the protection scope of this application.

For example, when the first parameter includes the duration of the narrowband synchronization frame, and the bandwidth, the frequency point information, and the transmit power that are used to send the narrowband synchronization frame, the transmitter device starts to send the narrowband synchronization frame at the moment obtained by adding the baseline slot to the offset, and sends the narrowband synchronization frame based on the specified duration of the narrowband synchronization frame, and the bandwidth, the frequency point information, and the transmit power that are used to send the narrowband synchronization frame. Similarly, the receiver device receives the narrowband synchronization frame in a transmission manner indicated by the first parameter.

For example, the receiver device determines an opening moment of a receive window based on the first moment, to successfully receive the narrowband synchronization frame. The opening moment of the receive window is earlier than the first moment. The receiver device opens the receive window at the opening moment of the receive window. The receive window is used to receive the narrowband synchronization frame.

In a possible implementation, in this embodiment, the transmitter device sending the narrowband synchronization frame to the receiver device may be: when a narrowband event (for example, a narrowband event like Wi-Fi or BLE) occurs, simultaneously sending the narrowband synchronization frame and starting the narrowband event.

In another possible implementation, in this embodiment, the transmitter device sending the narrowband synchronization frame to the receiver device may be that the transmitter device, triggered by another device (for example, the positioning management device), sends the narrowband synchronization frame to the receiver device after receiving a trigger frame (for example, a trigger frame for triggering clock synchronization) from the another device.

It should be understood that the foregoing is merely an example for describing a possible manner in which the transmitter device sends the narrowband synchronization frame to the receiver device, and does not constitute any limitation on the protection scope of this application.

It can be learned from the foregoing that the narrowband synchronization frame sent by the transmitter device to the receiver device is used to implement coarse clock synchronization in the UWB system. After receiving the narrowband synchronization frame, the receiver device may indicate, via acknowledgment information, that the narrowband synchronization frame is successfully received, and can implement coarse clock synchronization in the UWB system based on the narrowband synchronization frame. The method procedure shown in FIG. 6 further includes the following steps:
S640: The receiver device sends the acknowledgment information to the transmitter device. In other words, the transmitter device receives the acknowledgment information from the receiver device.

The acknowledgment information indicates that the receiver device successfully receives the narrowband synchronization frame.

Optionally, if the transmitter device does not receive the acknowledgment information, the transmitter device may not transmit the subsequent UWB frame, to reduce signaling overheads.

S650: The receiver device implements coarse clock synchronization in the UWB system based on the narrowband synchronization frame.

Specifically, the receiver device calculates the time synchronization point and the frequency offset estimation value based on the narrowband synchronization frame, and performs coarse clock synchronization in the UWB system based on the time synchronization point and the frequency offset estimation value.

It should be understood that the receiver device implementing coarse clock synchronization in the UWB system based on the narrowband synchronization frame may be understood as follows: The receiver device calculates, based on the narrowband synchronization frame, the time synchronization point and the frequency offset estimation value that are transferred from the narrowband system to the UWB system, and then calculates, based on the time synchronization point and the frequency offset estimation value, the start moment at which the UWB frame is received. The manner of calculating the start moment at which the UWB frame is received can be used to implement synchronization with precision of half or one symbol, which is referred to as coarse clock synchronization in UWB.

For example, implementation of coarse clock synchronization in the UWB system in this embodiment includes: The receiver device determines that the start moment at which the UWB frame is received by the wideband system satisfies the following: the start moment = the time synchronization point + the duration for switching from the narrowband to the wideband * the frequency offset estimation value.

The foregoing transmission of the narrowband synchronization frame implements coarse clock synchronization in the UWB system. After coarse clock synchronization in the UWB, fine clock synchronization in the UWB may be performed.

In a possible implementation, fine synchronization with precision at a sampling point level may be implemented based on a frame header part (for example, a preamble sequence of the UWB frame) of the UWB frame, to implement fine clock synchronization in the UWB. For ease of understanding, the following describes fine clock synchronization in the UWB in this embodiment with reference to a specific step. The method procedure shown in FIG. 6 further includes the following step:
S660: The transmitter device sends the UWB frame to the receiver device. In other words, the receiver device receives the UWB frame from the transmitter device.

Specifically, the transmitter device starts to send the UWB frame to the receiver device after the first duration after sending of the narrowband synchronization frame ends, where a frame header of the UWB frame is used for fine clock synchronization in the UWB system.

Optionally, in this embodiment, the frame header of the UWB frame may be a preamble part of the UWB frame.

In a possible implementation, a frame format of the UWB frame in this embodiment may be: a simplified and shortened preamble + short idle time + a training sequence used for ranging + short idle time + a training sequence used for ranging +..., where the short idle time indicates that preparation is performed for the "training sequence used for testing" that is to be transmitted, for example, increasing power, that is, improving transmission efficiency of the "training sequence used for testing".

The foregoing basic concepts describe coarse clock synchronization and fine clock synchronization in clock synchronization in the UWB system in the conventional technology. The coarse clock synchronization and the fine clock synchronization depend on a preamble sequence of a PPDU (which is equivalent to the UWB frame). Compared with clock synchronization in a UWB system in the conventional technology, coarse clock synchronization in clock synchronization in the UWB system shown in the embodiment shown in FIG. 6 depends on the narrowband synchronization frame, and fine clock synchronization may depend on a simplified and shortened preamble sequence of the UWB frame.

It can be known from the foregoing that clock synchronization in the UWB system in the conventional technology depends on the preamble sequence of the UWB frame, and coarse clock synchronization can be completed only after a process of normally capturing and searching for a signal. Consequently, this occupies much time, and increases a large area of a chip. However, in embodiments of this application, this process is completed via the narrowband synchronization frame. Therefore, this reduces complexity of clock synchronization in the UWB system, reduces a transmission delay of the UWB frame, saves air interface resources, reduces an area of a UWB chip, and reduces power consumption of the UWB chip.

Optionally, after receiving the UWB frame from the transmitter device, the receiver device may send a reply UWB frame to the transmitter device. The reply UWB frame indicates that receiving of the UWB frame is completed, and the reply UWB frame includes phase information of the receiver device.

Further, after clock synchronization is implemented, a measurement procedure such as ranging and/or positioning may be performed. When the transmitter device sends the first parameter to the receiver device over the narrowband system connection link, the transmitter device and the receiver device may transmit an encrypted measurement-related parameter and measurement result over the narrowband system connection link, to improve security of transmission of the measurement-related parameter and the measurement result. The measurement-related parameter is used to determine a measurement process to be performed by the transmitter device and the receiver device, and the measurement result includes a result obtained after the transmitter device and the receiver device perform the measurement.

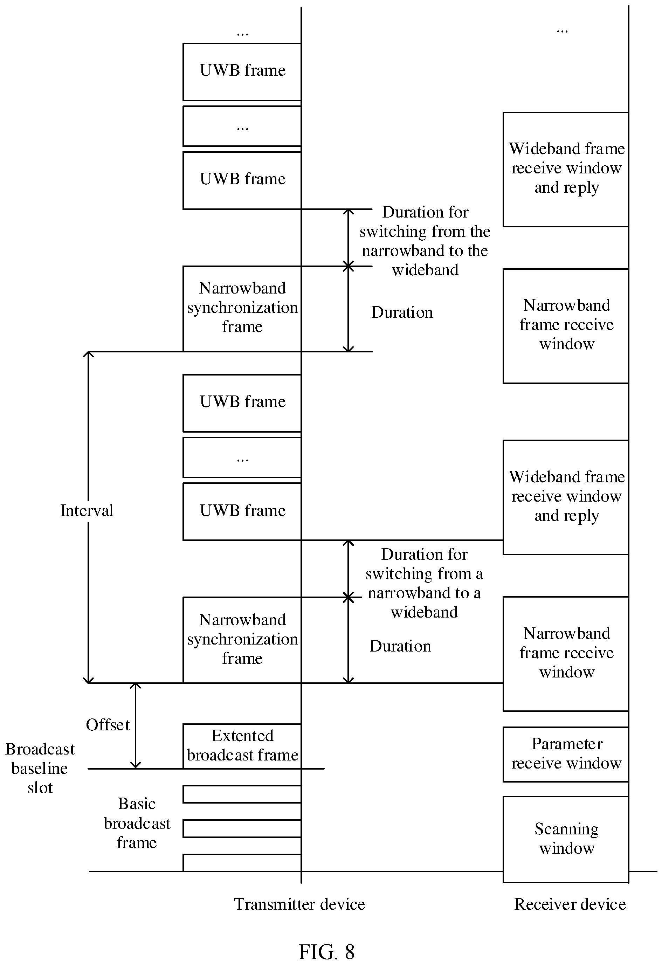

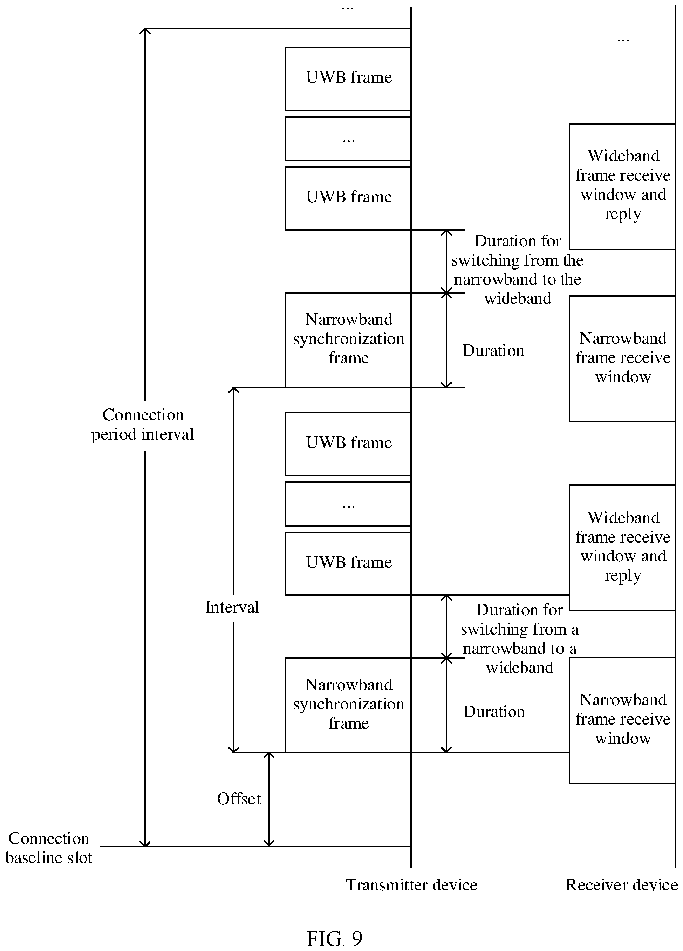

The foregoing describes in detail the clock synchronization method in the UWB system provided in this application with reference to FIG. 6. For ease of understanding, with reference to FIG. 8 and FIG. 9, the following describes in detail a procedure in which the transmitter device and the receiver device completes clock synchronization in a wideband system.

According to an embodiment provided in this application, parameter negotiation before sending the narrowband synchronization frame is completed in a narrowband system broadcast manner. For ease of understanding, the embodiment is described with reference to FIG. 8. FIG. 8 is a diagram of completing clock synchronization in a wideband system according to an embodiment of this application. The following steps are specifically included.
(1) The transmitter device sends the narrowband system broadcast frame, including the basic broadcast frame and the extended broadcast frame. The extended broadcast frame carries the first parameter.
(2) The transmitter device sends, based on the duration of the narrowband synchronization frame, and the bandwidth, a frequency point, and the transmit power that are specified in the first parameter, the narrowband synchronization frame at a moment obtained by adding a broadcast baseline slot to the offset. After the duration for switching from the narrowband to the wideband, a wideband frame starts to be sent.
(3) After receiving and parsing the extended broadcast frame, and before the moment obtained by adding the broadcast baseline slot to the offset, the receiver device opens the receive window to receive the narrowband synchronization frame, and calculates the time synchronization point and the frequency offset estimation value.
(4) The receiver device completes fine clock synchronization of the wideband frame based on the time synchronization point and the frequency offset estimation value, and starts to receive the wideband frame after the duration for switching from the narrowband to the wideband. After receiving of the wideband frame is completed, the wideband frame may also be replied to the transmitter device.
(5) The transmitter device subsequently sends the narrowband synchronization frame based on an interval period, and the receiver device receives the narrowband synchronization frame in a same manner.

According to another embodiment provided in this application, parameter negotiation before sending the narrowband synchronization frame is completed over the narrowband system connection link. For ease of understanding, the embodiment is described with reference to FIG. 9. FIG. 9 is another diagram of completing clock synchronization in a wideband system according to an embodiment of this application. The following steps are specifically included.
(1) The narrowband system connection link is set up between the transmitter device and the receiver device. The configured notification frame is sent based on the connection link. The notification frame includes the first parameter.
   Optionally, the transmitter device and the receiver device may negotiate an appropriate parameter. For example, the transmitter device sends the configured request frame. The request frame includes the second parameter. After receiving the request frame, the receiver device sends a configured reply frame for responding. The response frame includes the third parameter. After receiving the reply frame, the transmitter device determines the first parameter based on the second parameter and the third parameter.
(2) The transmitter device sends, based on the duration of the narrowband synchronization frame, and the bandwidth, a frequency point, and the transmit power that are specified in the first parameter, the narrowband synchronization frame at a moment obtained by adding a connection baseline slot to the offset. After the duration for switching from the narrowband to the wideband, a wideband frame starts to be sent.
(3) After receiving and parsing the configured notification frame, and before the moment obtained by adding the connection baseline slot to the offset, the receiver device opens the receive window to receive the narrowband synchronization frame, and calculates the time synchronization point and the frequency offset estimation value.
(4) The receiver device completes fine clock synchronization of the wideband frame based on the time synchronization point and the frequency offset estimation value, and starts to receive the wideband frame after the duration for switching from the narrowband to the wideband. After receiving of the wideband frame is completed, the wideband frame may also be replied to the transmitter device.
(5) The transmitter device subsequently sends the narrowband synchronization frame based on an interval period, and the receiver device receives the narrowband synchronization frame in a same manner.

It should be understood that sequence numbers of the foregoing processes do not mean execution sequences. The execution sequences of the processes should be determined based on functions and internal logic of the processes, and should not be construed as any limitation on implementation processes in embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. For example, the foregoing embodiments mainly describe implementation of clock synchronization, in the UWB system, between one transmitter device and one receiver device. This solution may also be applied to clock synchronization, in the UWB system, between one-to-many and/or many-to-many devices.

It should be further understood that in some of the foregoing embodiments, a device in a conventional network architecture is mainly used as an example for description (for example, a transmitter device and a receiver device). It should be understood that a specific form of the device is not limited in embodiments of this application. For example, all devices that can implement a same function in the future are applicable to embodiments of this application.

It may be understood that, in the foregoing method embodiments, the method and the operation implemented by the device (for example, the transmitter device or the receiver device) may also be implemented by a component (for example, a chip or a circuit) of the device.

The foregoing describes in detail the clock synchronization method in embodiments of this application with reference to FIG. 6. The clock synchronization method is mainly described from a perspective of interaction between the transmitter device and the receiver device. It may be understood that, to implement the foregoing functions, the transmitter device and the receiver device include corresponding hardware structures and/or software modules for performing the functions.

A person skilled in the art may be aware that, with reference to the examples described in embodiments disclosed in this specification, units and algorithm steps may be implemented by hardware or a combination of hardware and computer software in this application. Whether a function is executed by hardware or hardware driven by computer software depends on particular applications and design constraint conditions of the technical solutions. A person skilled in the art may use different methods to implement the described functions for each specific application. However, it should not be considered that the implementation goes beyond the scope of this application.

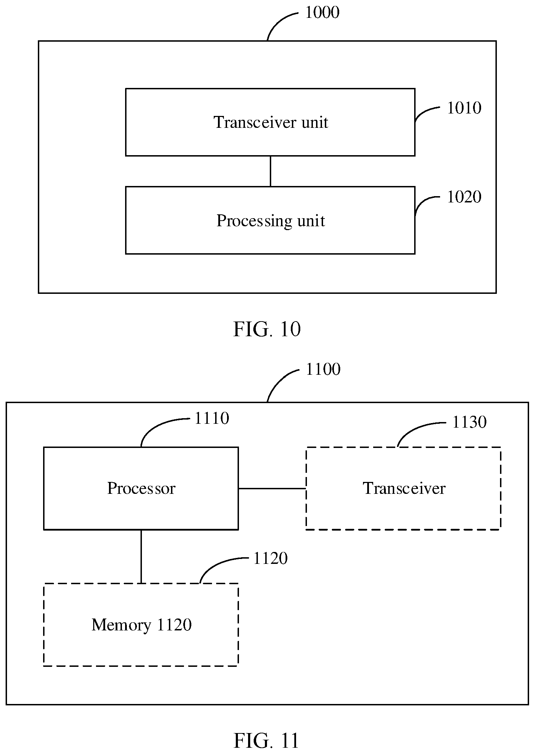

The following describes in detail a clock synchronization apparatus in embodiments of this application with reference to FIG. 10 and FIG. 11. It should be understood that descriptions about apparatus embodiments correspond to the descriptions about the method embodiments. Therefore, for content that is not described in detail, refer to the foregoing method embodiments. For brevity, a part of the content is not described again.

In embodiments of this application, a transmitter device or a receiver device may be divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, division into the modules is an example, and is merely logical function division. During actual implementation, another division manner may be used. An example in which each functional module is obtained through division based on each corresponding function is used below for description.

FIG. 10 is a block diagram of a clock synchronization apparatus according to an embodiment of this application. As shown in FIG. 10, an apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a communication unit.

Optionally, the apparatus 1000 may further include a storage unit. The storage unit may be configured to store instructions and/or data. The processing unit 1020 may read the instructions and/or the data in the storage unit, so that the apparatus implements the foregoing method embodiments.

The apparatus 1000 may be configured to perform actions performed by a transceiver device (for example, the transmitter device and the receiver device) in the foregoing method embodiments. In this case, the apparatus 1000 may be the transceiver device or a component that can be configured in the transceiver device. The transceiver unit 1010 is configured to perform receiving/sending-related operations of the transceiver device in the foregoing method embodiments, and the processing unit 1020 is configured to perform processing-related operations of the transceiver device in the foregoing method embodiments.

In a design, the apparatus 1000 is configured to perform actions performed by the transmitter device in the foregoing method embodiments.

The processing unit 1020 is configured to obtain a first parameter, where the first parameter includes a parameter used to determine a first moment at which a narrowband synchronization frame is sent on a narrowband channel and a parameter indicating first duration for switching from a narrowband system to a wideband system. The transceiver unit 1010 is configured to start to send the narrowband synchronization frame to a receiver device on the narrowband channel at the first moment. The narrowband synchronization frame is used for coarse clock synchronization in an ultra-wideband UWB system. The transceiver unit 1010 is configured to start to send a UWB frame to the receiver device after the first duration after sending of the narrowband synchronization frame ends. A frame header of the UWB frame is used for fine clock synchronization in the UWB system.

The apparatus 1000 may implement steps or procedures performed by the transmitter device in the method embodiments according to embodiments of this application. The apparatus 1000 may include units configured to perform the methods performed by the transmitter device in the method embodiments. In addition, the units in the apparatus 1000 and the foregoing other operations and/or functions are separately used to implement corresponding procedures in the method embodiments of the transmitter device in the method embodiments.

When the apparatus 1000 is configured to perform the method shown in FIG. 6, the transceiver unit 610 may be configured to perform receiving/sending steps in the method, for example, steps S611, S612, S620, S621, S630, S640, and S660. The processing unit 620 may be configured to perform a processing step in the method, for example, step S610.

It should be understood that a specific process in which each unit performs the corresponding step has been described in detail in the method embodiments. For brevity, details are not described herein again. In addition, beneficial effects brought by performing the foregoing corresponding steps by the units are described in detail in the foregoing method embodiments, and details are not described herein again.

In another design, the apparatus 1000 is configured to perform actions performed by the receiver device in the foregoing method embodiments.

The processing unit 620 is configured to obtain a first parameter, where the first parameter includes a parameter used to determine a first moment at which a narrowband synchronization frame is sent on a narrowband channel and a parameter indicating first duration for switching from a narrowband system to a wideband system. The transceiver unit 610 is further configured to start to receive the narrowband synchronization frame from the transmitter device on the narrowband channel at the first moment, where the narrowband synchronization frame is used for coarse clock synchronization in an ultra-wideband UWB system. The transceiver unit 610 is further configured to start to receive a UWB frame from the transmitter device after the first duration after receiving of the narrowband synchronization frame ends. A frame header of the UWB frame is used for fine clock synchronization in the UWB system.

The apparatus 1000 may implement steps or procedures performed by the receiver device in the method embodiments according to embodiments of this application. The apparatus 1000 may include units configured to perform the methods performed by the receiver device in the method embodiments. In addition, the units in the apparatus 1000 and the foregoing other operations and/or functions are separately used to implement corresponding procedures in the method embodiments of the receiver device in the method embodiments.

When the apparatus 1000 is configured to perform the method shown in FIG. 6, the transceiver unit 610 may be configured to perform receiving/sending steps in the method, for example, steps S611, S612, S620, S621, S630, S640, and S660. The processing unit 620 may be configured to perform a processing step in the method, for example, step S650.

It should be understood that, a specific process in which each unit performs the corresponding step has been described in detail in the method embodiments. For brevity, details are not described herein again. In addition, beneficial effects brought by performing the foregoing corresponding steps by the units are described in detail in the foregoing method embodiments, and details are not described herein again.

The processing unit 1020 in the foregoing embodiments may be implemented by at least one processor or a processor-related circuit. The transceiver unit 1010 may be implemented by a transceiver or a transceiver-related circuit. The storage unit may be implemented by at least one memory.

As shown in FIG. 11, an embodiment of this application further provides an apparatus 1100. The apparatus 1100 includes a processor 1110, and may further include one or more memories 1120. The processor 1110 is coupled to the memory 1120. The memory 1120 is configured to store a computer program or instructions and/or data. The processor 1110 is configured to execute the computer program or the instructions and/or the data stored in the memory 1120, so that the method in the foregoing method embodiments is performed. Optionally, the apparatus 1100 includes one or more processors 1110.

Optionally, the memory 1120 and the processor 1110 may be integrated, or separately disposed.

Optionally, as shown in FIG. 11, the apparatus 1100 may further include a transceiver 1130. The transceiver 1130 is configured to receive and/or send signals. For example, the processor 1110 is configured to control the transceiver 1130 to receive and/or send signals.

In a solution, the apparatus 1100 is configured to implement an operation performed by the transceiver device (for example, the transmitter device and the receiver device) in the foregoing method embodiments.

An embodiment of this application further provides a computer-readable storage medium. The computer-readable storage medium stores computer instructions used to implement the method performed by the transceiver device (for example, the transmitter device and the receiver device) in the foregoing method embodiments.

For example, when the computer program is executed by a computer, the computer can implement the method performed by the transceiver device (for example, the transmitter device and the receiver device) in the foregoing method embodiments.

An embodiment of this application further provides a computer program product including instructions. When the instructions are executed by a computer, the computer is enabled to implement the method performed by the transceiver device (for example, the transmitter device and the receiver device) in the foregoing method embodiments.

An embodiment of this application further provides a communication system. The communication system includes the transmitter device and the receiver device in the foregoing method embodiments.

For explanations and beneficial effects of related content of any one of the apparatuses provided above, refer to the corresponding method embodiments provided above. Details are not described herein again.

It should be understood that, the processor mentioned in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should further be noted that the memory described herein is intended to include, but is not limited to, these and any other suitable type of memory.

A person of ordinary skill in the art may be aware that, in combination with the examples described in embodiments disclosed in this specification, units and methods may be implemented by electronic hardware or a combination of computer software and electronic hardware. Whether the functions are executed by hardware or software depends on particular applications and design constraints of the technical solutions. A person skilled in the art may use different methods to implement the described functions for each specific application. However, it should not be considered that the implementation goes beyond the protection scope of this application.

In the several embodiments provided in this application, it should be understood that the disclosed apparatus and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

## Claims

1. A clock synchronization method, comprising:
obtaining, by a transmitter device, a first parameter, wherein the first parameter comprises a parameter used to determine a first moment at which a narrowband synchronization frame is sent on a narrowband channel and a parameter indicating first duration for switching from a narrowband system to a wideband system;
starting, by the transmitter device, to send the narrowband synchronization frame to a receiver device on the narrowband channel at the first moment, wherein the narrowband synchronization frame is used for coarse clock synchronization in an ultra-wideband UWB system; and
starting, by the transmitter device, to send a UWB frame to the receiver device after the first duration after sending of the narrowband synchronization frame ends, wherein a frame header of the UWB frame is used for fine clock synchronization in the UWB system.

2. The method according to claim 1, wherein the narrowband synchronization frame comprises a preamble, a synchronization sequence, and a carrier signal, the preamble is used for automatic gain control, the synchronization sequence is used to determine a time synchronization point, the carrier signal is used to calculate a frequency offset estimation value, and the time synchronization point and the frequency offset estimation value are used for coarse clock synchronization in the UWB system.

3. The method according to claim 1 or 2, wherein the first parameter comprises the following parameters:
a baseline slot, an offset, an interval, duration of the narrowband synchronization frame, the duration for switching from a narrowband to a wideband, and bandwidth, frequency point information, and transmit power that are used to send the narrowband synchronization frame, wherein
the baseline slot and the offset are used to determine the first moment, the interval indicates an interval between two adjacent times of sending the narrowband synchronization frame, and the duration for switching from the narrowband to the wideband is used to determine the first duration.

4. The method according to any one of claims 1 to 3, wherein before the obtaining, by a transmitter device, a first parameter, the method further comprises:
sending, by the transmitter device, a second parameter to the receiver device, wherein the second parameter is a parameter that is expected by the transmitter device and on which transmission of the narrowband synchronization frame is based; and
receiving, by the transmitter device, a third parameter from the receiver device, wherein the third parameter is a parameter that is expected by the receiver device and on which transmission of the narrowband synchronization frame is based; and
the obtaining, by a transmitter device, a first parameter comprises:
determining, by the transmitter device, the first parameter based on the second parameter and the third parameter.

5. The method according to any one of claims 1 to 4, wherein the method further comprises:
sending, by the transmitter device, the first parameter to the receiver device; and
receiving, by the transmitter device, indication information from the receiver device, wherein the indication information indicates that transmission of the narrowband synchronization frame based on the first parameter is agreed on.

6. The method according to claim 5, wherein the sending, by the transmitter device, the first parameter to the receiver device comprises:
broadcasting, by the transmitter device, a narrowband system broadcast frame, wherein the narrowband system broadcast frame comprises the first parameter; or
sending, by the transmitter device, a configured notification frame to the receiver device over a narrowband system connection link, wherein the configured notification frame comprises the first parameter, wherein
the narrowband system connection link comprises a link between the transmitter device and the receiver device.

7. The method according to claim 6, wherein when the transmitter device sends the configured notification frame to the receiver device over the narrowband system connection link, the method further comprises:
transmitting an encrypted measurement-related parameter and measurement result between the transmitter device and the receiver device over the narrowband system connection link, wherein
the measurement-related parameter is used to determine a measurement process to be performed by the transmitter device and the receiver device, and the measurement result comprises a result obtained after the transmitter device and the receiver device perform the measurement.

8. The method according to any one of claims 1 to 7, wherein the method further comprises:
receiving, by the transmitter device, acknowledgment information from the receiver device, wherein the acknowledgment information indicates that the receiver device successfully receives the narrowband synchronization frame.

9. A clock synchronization method, comprising:
obtaining, by a receiver device, a first parameter, wherein the first parameter comprises a parameter used to determine a first moment at which a narrowband synchronization frame is sent on a narrowband channel and a parameter indicating first duration for switching from a narrowband system to a wideband system;
starting, by the receiver device, to receive the narrowband synchronization frame from the transmitter device on the narrowband channel at the first moment;
performing, by the receiver device, coarse clock synchronization in an ultra-wideband UWB system based on the narrowband synchronization frame and the first duration, to determine a start moment at which a UWB frame is received; and
starting, by the receiver device, to receive the UWB frame from the transmitter device at the start moment at which the UWB frame is received, wherein a frame header of the UWB frame is used for fine clock synchronization in the UWB system.

10. The method according to claim 9, wherein the narrowband synchronization frame comprises a preamble, a synchronization sequence, and a carrier signal, the preamble is used for automatic gain control, the synchronization sequence is used to determine a time synchronization point, the carrier signal is used to calculate a frequency offset estimation value, and the time synchronization point and the frequency offset estimation value are used for coarse clock synchronization in the UWB system.

11. The method according to claim 9 or 10, wherein the first parameter comprises the following parameters:
a baseline slot, an offset, an interval, duration of the narrowband synchronization frame, the duration for switching from a narrowband to a wideband, and bandwidth, frequency point information, and transmit power that are used to send the narrowband synchronization frame, wherein
the baseline slot and the offset are used to determine the first moment, the interval indicates an interval between two adjacent times of sending the narrowband synchronization frame, and the duration for switching from the narrowband to the wideband is used to determine the first duration.

12. The method according to claim 9 or 10, wherein before the obtaining, by a receiver device, a first parameter, the method further comprises:
receiving, by the receiver device, a second parameter from the transmitter device, wherein the second parameter is a parameter that is expected by the transmitter device and on which transmission of the narrowband synchronization frame is based; and
sending, by the receiver device, a third parameter to the transmitter device, wherein the third parameter is a parameter that is expected by the receiver device and on which transmission of the narrowband synchronization frame is based, wherein
the second parameter and the third parameter are used to determine the first parameter.

13. The method according to any one of claims 9 to 12, wherein the obtaining, by a receiver device, a first parameter comprises:
receiving, by the receiver device, the first parameter from the transmitter device; and
the method further comprises:
determining, by the receiver device, that the first parameter is a parameter that is expected by the receiver device and on which transmission of the narrowband synchronization frame is based; and
sending, by the receiver device, indication information to the transmitter device, wherein the indication information indicates that transmission of the narrowband synchronization frame based on the first parameter is agreed on.

14. The method according to claim 13, wherein the receiving, by the receiver device, the first parameter from the transmitter device comprises:
receiving, by the receiver device, a narrowband system broadcast frame from the transmitter device, wherein the narrowband system broadcast frame comprises the first parameter; or
receiving, by the receiver device, a configured notification frame from the transmitter device over a narrowband system connection link, wherein the configured notification frame comprises the first parameter, wherein
the narrowband system connection link comprises a link between the transmitter device and the receiver device.

15. The method according to claim 14, wherein when the receiver device receives the configured notification frame from the transmitter device over the narrowband system connection link, the method further comprises:
transmitting an encrypted measurement-related parameter and measurement result between the transmitter device and the receiver device over the narrowband system connection link, wherein
the measurement-related parameter is used to determine a measurement process to be performed by the transmitter device and the receiver device, and the measurement result comprises a result obtained after the transmitter device and the receiver device perform the measurement.

16. The method according to any one of claims 9 to 15, wherein the method further comprises:
determining, by the receiver device, an opening moment of a receive window based on the first moment, wherein the opening moment of the receive window is earlier than the first moment; and
opening, by the receiver device, the receive window at the opening moment of the receive window, wherein the receive window is used to receive the narrowband synchronization frame.

17. The method according to any one of claims 9 to 16, wherein the method further comprises:
sending, by the receiver device, acknowledgment information to the transmitter device, wherein the acknowledgment information indicates that the receiver device successfully receives the narrowband synchronization frame.

18. A clock synchronization apparatus, comprising a unit configured to perform the method according to any one of claims 1 to 8.

19. A clock synchronization apparatus, comprising a unit configured to perform the method according to any one of claims 9 to 17.

20. A computer-readable storage medium, wherein the computer-readable storage medium stores a computer program, and when the computer program is run, an apparatus is enabled to perform the method according to any one of claims 1 to 17.

21. A chip system, comprising a processor, configured to invoke a computer program from a memory and run the computer program, to enable a clock synchronization apparatus in which the chip system is installed to perform the method according to any one of claims 1 to 17.

22. A communication system, wherein the communication system comprises at least one clock synchronization apparatus according to claim 18 and at least one clock synchronization apparatus according to claim 19.
